# FASCICULE DE BREVET EUROPEEN

(11) **EP 2 948 754 B1**
(45) Date de publication et mention de la délivrance du brevet: **13.01.2021**
(21) Numéro de dépôt: 14704846.6
(22) Date de dépôt: 23.01.2014
(51) Int. Cl.: G01N 17/00, B08B 3/12, B08B 9/027, F28G 7/00

(54) **PROCÉDÉ D'INTERVENTION SUR DES CANALISATIONS SOUS-MARINES**
VERFAHREN ZUR DURCHFÜHRUNG VON ARBEITEN AUF UNTERWASSERROHREN
METHOD FOR PERFORMING WORK ON UNDERWATER PIPES

(30) Priorité: 24.01.2013 FR 1350613
(43) Date de publication de la demande: 02.12.2015
(73) Titulaire: TOTAL SE, 92400 Courbevoie (FR)
(72) Inventeur: ALCURI, Gustavo, F-75016 Paris (FR); SOMERS, Alexander, F-64000 Pau (FR); COURBOT, Anne, F-64000 Pau (FR); OUCHENE, Saïd Ben Chalellou, F-13012 Marseille (FR)
(74) Mandataire: Plasseraud IP
(86) Numéro de dépôt international: PCT/FR2014/050134
(87) Numéro de publication internationale: WO 2014/114887

(56) Documents cités:
- WO-A1-2010/086238
- GB-A- 2 440 948
- US-A- 3 175 567
- US-A- 4 893 361
- US-A1- 2005 284 625

## Description

La présente invention concerne les techniques offshore et en particulier les techniques mises en œuvre pour détecter, localiser, caractériser et/ou détruire des obstructions dans des canalisations sous-marines, notamment dans le contexte de la production offshore d'hydrocarbures.

Les canalisations auxquelles on s'intéresse ici incluent toute conduite d'hydrocarbures située entre une tête de puits (sur le fond marin) et un bateau destiné au stockage et éventuellement au traitement des hydrocarbures, communément appelé FPSO (floating production, storage and offloading). Ces conduites comprennent en particulier les lignes de production (*flowline*), les *jumpers,* les *spools,* les *risers,* les *bundles.*

D'autre part, on entend par obstruction tout type de dépôt solide ou de viscosité importante susceptible de se situer à l'intérieur de la canalisation, et donc susceptible de gêner l'écoulement des hydrocarbures. Il peut s'agir de dépôts d'hydrates, de paraffines, de minéraux, d'asphaltènes, de naphtènates. En particulier, des bouchons constitués de cristaux d'hydrates de gaz peuvent se former dans des canalisations de transport d'hydrocarbures. Ces hydrates se forment en présence de gaz d'hydrocarbures légers (méthane, éthane, propane,...) et de molécules d'eau dans des conditions de haute pression et basse température. De telles conditions se rencontrent notamment dans le cas des canalisations sous-marines utilisées dans l'exploitation pétrolière ou gazière offshore.

Bien entendu, l'apparition d'éléments obstruants dans des canalisations offshore est hautement indésirable. Si l'obstruction est partielle, c'est-à-dire si elle ne ferme pas toute la section de la canalisation, elle perturbe fortement l'écoulement, d'autant plus que la formation d'hydrates ou d'autres composés tend également à augmenter la viscosité du fluide à transporter. Si l'obstruction est totale, la canalisation est complètement hors service. Lorsque de telles circonstances se produisent, l'opérateur a besoin de techniques efficaces pour repérer où se trouve l'obstruction le long de la canalisation et pour la détruire. Il est notamment souhaitable que ces techniques ne soient pas intrusives, c'est-à-dire ne nécessitent pas d'ouvrir la canalisation pour accéder à l'intérieur.

Une méthode connue d'attaque de bouchons d'hydrates utilise une dépressurisation de la canalisation afin de rompre l'équilibre thermodynamique favorable à la formation d'hydrates. La dépressurisation doit être obtenue simultanément des deux côtés du bouchon, afin d'équilibrer l'effet mécanique sur celui-ci et d'éviter ainsi que le bouchon se déplace trop brusquement dans la canalisation plutôt que d'être détruit. Cette opération n'est pas toujours possible, en particulier dans le cas de bouchons multiples ou en cas d'obstruction partielle.

L'injection d'inhibiteurs chimiques peut être un moyen complémentaire pour provoquer le phénomène de dilacération. Les agents couramment utilisés sont, par exemple, l'éthanol ou le méthanol. Ils doivent être injectés en grandes quantités.

Une autre approche repose sur l'action de transducteurs ultrasonores de puissance répartis autour de la canalisation. GB 2 440 948 A mentionne l'enlèvement d'obstructions sur la paroi interne d'une canalisation au moyen de transducteurs ultrasonores répartis autour de la canalisation et appliquant des vibrations multi-fréquence pour générer des bulles de cavitation aptes à arracher des éléments obstruant la canalisation.

Avant de s'attaquer à un bouchon dans une canalisation, il faut être capable de le localiser. De préférence, la méthode de localisation employée doit être non intrusive, c'est-à-dire ne pas requérir d'accès à l'intérieur de la canalisation, ce qui peut s'avérer impossible ou très malcommode, surtout dans l'offshore profond.

Des procédés connus de détection de dépôts dans une canalisation utilisent une excitation vibratoire générée par un actionneur qui provoque une réponse mesurée au niveau d'un capteur situé en aval de l'actionneur le long de la canalisation. US 2008/0215248 A1 décrit un tel procédé pour détecter des bio-films pouvant se déposer sur les parois de réservoirs ou canalisations faisant partie d'installations industrielles. Dans WO 2010/086238 A1, il est proposé d'estimer l'épaisseur d'un dépôt cireux à l'intérieur de pipelines pétroliers par une mesure de la fréquence de résonance de la structure. Le procédé décrit dans FR 2 754 898 B1 cherche à évaluer l'épaisseur du dépôt éventuellement formé à l'intérieur de la canalisation à partir d'une estimation des coefficients d'amortissement de vibrations à basse fréquence (moins de 5 kHz) dans la partie excitée de la canalisation.

Ces différentes méthodes peuvent être d'une mise en œuvre délicate. Elles n'offrent pas une réponse globale à la problématique de la localisation et de la destruction d'obstructions dans des canalisations offshore.

Il existe un besoin pour une approche mieux adaptée à l'environnement sous-marin.

Le document US 2005/284625 concerne un système pour surveiller et pour éliminer une obstruction dans un puits, en utilisant un outil disposé dans le puits et, portés par ledit outil, une source d'impulsions acoustiques et des hydrophones pour détecter une obstruction et un émetteur acoustique pour la destruction de l'obstruction.

Le document US 3 175 567 concerne un dispositif pour effectuer un nettoyage ultrasonore de l'intérieur d'une canalisation.

L'invention propose un procédé d'intervention sur une canalisation sous-marine, comprenant une phase de descente dans le milieu marin d'un appareillage comprenant un système d'émission d'ultrasons et au moins un transducteur de réception d'ultrasons, une phase d'inspection le long de la canalisation à l'aide de l'appareillage descendu puis, lorsque la phase d'inspection montre une condition de localisation d'une obstruction à un emplacement le long de la canalisation, une phase de destruction de l'obstruction à cet emplacement à l'aide de l'appareillage descendu.

La phase d'inspection comprend:
- disposer une source ultrasonore d'inspection du système d'émission d'ultrasons et le transducteur de réception de part et d'autre de la canalisation;
- activer la source d'inspection et enregistrer un signal ultrasonore capté par le transducteur de réception; et
- détecter la condition de localisation d'une obstruction à l'emplacement où sont disposés la source d'inspection et le transducteur de réception en réponse à l'observation d'une anomalie dans le signal ultrasonore capté par le transducteur de réception à cet emplacement.

La phase de destruction comprend:
- coupler une source de puissance du système d'émission d'ultrasons à la canalisation audit emplacement; et
- activer la source de puissance pour détruire l'obstruction.

La source d'inspection et la source de puissance partagent un même générateur ultrasonore et un même transducteur.

En outre :
- on utilise des signaux impulsionnels à large bande durant la phase d'inspection, et
- on utilise des signaux monochromatiques à fréquence variable durant la phase de destruction

Le même appareillage est donc utilisé pour localiser puis pour détruire, ou du moins tenter de détruire, une obstruction dès qu'elle a été localisée. Une excitation ultrasonore est utilisée dans les deux cas. Les termes « source ultrasonore d'inspection » et « source de puissance » désignent chacun un dispositif émetteur d'ondes ultrasonores, pouvant par exemple être un transducteur.

Dans un mode de réalisation particulier, le procédé comprend en outre une phase de vérification dans laquelle la source d'inspection et le transducteur de réception sont à nouveau disposés de part et d'autre de la canalisation après la phase de destruction de l'obstruction, et la source d'inspection est activée pour vérifier si le signal ultrasonore capté par le transducteur de réception présente encore l'anomalie.

L'appareillage est avantageusement déplacé le long de la canalisation au cours de la phase d'inspection, et l'étape d'activation de la source d'inspection et d'enregistrement du signal ultrasonore capté par le transducteur de réception est répétée jusqu'à ce qu'une anomalie soit observée dans le signal ultrasonore enregistré, ce qui donne la position présumée d'une obstruction.

L'excitation ultrasonore est typiquement à plus haute fréquence en phase d'inspection qu'en phase de destruction. En particulier, la source d'inspection est activée en mode impulsionnel dans la phase d'inspection. On peut alors observer l'anomalie dans le spectre du signal capté par le transducteur de réception, le plus souvent dans les fréquences les plus hautes de ce spectre.

Dans la phase de destruction, la source de puissance est activée par un signal de commande à large bande. Cela est un signal de commande sensiblement monochromatique dont on fait varier la fréquence ultrasonore. La bande large balayée lors de la variation de fréquence peut être une plage comprise entre 10 kHz et 30 kHz. La fréquence ultrasonore du signal de commande sensiblement monochromatique peut varier dans cette plage avec une fréquence de balayage inférieure à 500 Hz. On assure ainsi que la fréquence du signal d'attaque de l'obstruction ait l'occasion de coïncider répétitivement avec la fréquence de résonance du système formé par la canalisation et l'obstruction qu'elle contient, maximisant ainsi le transfert de puissance de la source de puissance vers la cible.

Il est à noter que la réponse mécanique à l'excitation du système canalisation+obstruction varie au fur et à mesure du processus de destruction étant donné que la taille, la forme et/ou la nature physico-chimique de l'obstruction évolue. Le balayage fréquentiel permet néanmoins d'atteindre l'obstruction sans qu'il soit nécessaire de connaître précisément l'évolution de sa taille, de sa forme ou de sa nature physico-chimique.

Lors de la destruction, on combine l'effet d'une excitation mécanique directe de l'obstruction et celui de l'attaque par le phénomène de cavitation pouvant se produire compte tenu de la présence d'un milieu liquide dans la canalisation.

D'autres particularités et avantages de la présente invention apparaîtront dans la description ci-après d'un exemple de réalisation non limitatif, en référence aux dessins annexés, dans lesquels :
- la figure 1 est un schéma synoptique d'un appareillage intégré de localisation et de destruction d'obstructions dans des canalisations sous-marines selon un mode de réalisation qui ne fait pas partie de l'invention mais est utile à la compréhension de l'invention, utilisant un générateur ultrasonore unique et des transducteurs piézoélectriques dissociés;
- la figure 2 est un schéma synoptique d'un appareillage intégré de localisation et de destruction d'obstructions selon un autre mode de réalisation qui ne fait pas partie de l'invention mais est utile à la compréhension de l'invention, dans lequel les sources ultrasonores (générateur + transducteur piézoélectrique) sont dissociées;
- la figure 3 est un schéma synoptique d'un autre appareillage selon un mode de réalisation selon l'invention, utilisant une seule source ultrasonore en phase d'inspection et en phase de destruction;
- la figure 4 est un schéma synoptique d'un système de destruction d'obstructions;
- la figure 5 est un schéma synoptique d'un système de localisation d'obstructions;
- les figures 6 et 7 sont des figures montrant des exemples de spectres ultrasonores enregistrés par un transducteur de réception dans une phase de localisation.

L'appareillage utilisé dans le procédé proposé ici comporte un système d'émission d'ultrasons capable de produire une excitation appliquée à la canalisation sous-marine 100 reposant sur le fond de la mer par l'intermédiaire d'appuis 101. Cette excitation est soit impulsionnelle, soit monochromatique à fréquence variable.

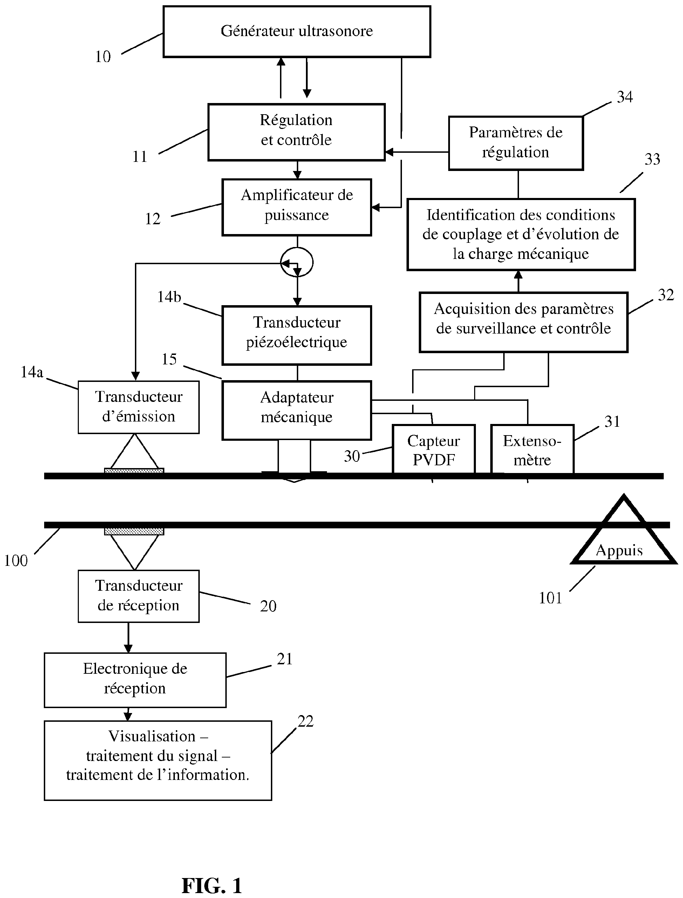

Dans l'appareillage représenté sur la figure 1, ces deux types d'excitation sont produits à partir d'un générateur ultrasonore 10 coopérant avec une unité de régulation et contrôle 11. Le signal ultrasonore issu du générateur 10 est amplifié par l'amplificateur 12, à un niveau de puissance adapté à l'opération en cours, puis dirigé soit vers un transducteur d'émission 14a (pour une phase d'inspection) soit vers un transducteur de puissance 14b (pour une phase de destruction). Un adaptateur mécanique 15 au contact de la canalisation 100 réalise le couplage entre le transducteur de puissance 14b et la canalisation 100. Dans l'exemple de la figure 1, la source d'inspection et la source de puissance utilisée en phase de destruction partagent le générateur ultrasonore 10.

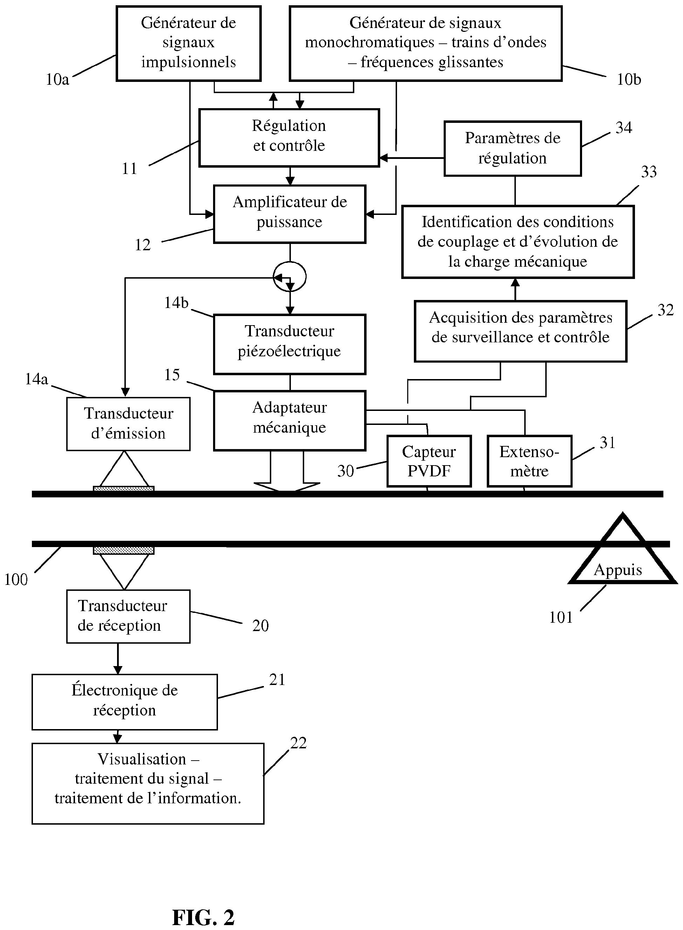

Dans l'appareillage illustré sur la figure 2, le système d'émission d'ultrasons a deux sources distinctes. La source d'inspection comporte un générateur 10a de signaux impulsionnels et le transducteur d'émission 14a recevant les signaux amplifiés de ce générateur 10a. Pour la destruction, la source de puissance comporte un générateur 10b de signaux monochromatiques sous forme de trains d'ondes à fréquences glissantes et le transducteur de puissance 14b.

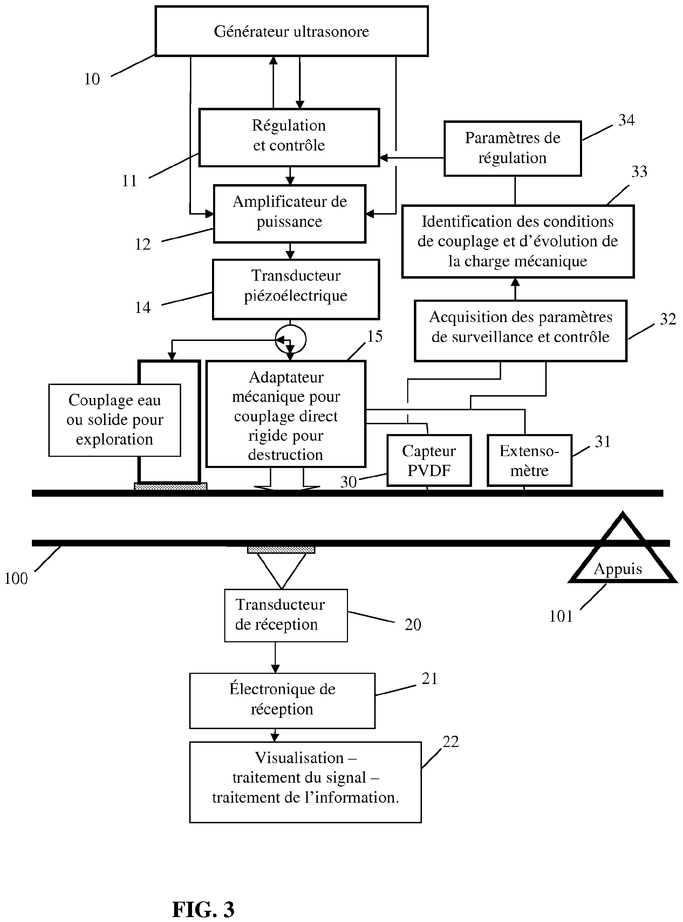

Dans le mode de réalisation selon l'invention Ilustré sur la figure 3, la source d'inspection et la source de puissance partagent un même générateur ultrasonore 10 et un même transducteur 14.

L'appareillage comporte en outre un ou plusieurs transducteurs de réception d'ultrasons 20 utilisés en phase d'inspection. Une électronique de réception 21 reçoit les signaux ultrasonores captés par ce(s) transducteur(s) 20 pour les amplifier, les mettre en forme et les fournir à une unité 22 de visualisation et de traitement. Dans une configuration avantageuse, il y a un transducteur de réception 20 placé de manière diamétralement opposée au transducteur d'émission 14a par rapport à la canalisation 100.

Dans un mode de réalisation selon la figure 1 ou la figure 2, l'électronique de commande est reliée à deux transducteurs piézoélectriques distincts, l'un 14a fonctionnant pour la localisation des obstructions, l'autre 14b pour la destruction. Chaque transducteur peut ainsi être optimisé pour la fonction qu'il doit remplir. Le transducteur d'émission 14a peut notamment comporter des moyens permettant de faciliter son déplacement le long de la canalisation 100. En effet, lors de la phase d'inspection, il convient d'assurer une mobilité du système le long de la canalisation. Inversement, dans la phase de destruction, on recherche un couplage optimal entre le transducteur et la canalisation, afin d'assurer un transfert d'énergie optimisé vers un point déterminé. Le transducteur 14b peut ainsi avantageusement comporter des moyens de fixation rigides.

Dans un mode de réalisation particulier (figure 1 ou figure 3), le générateur ultrasonore 10 est susceptible de générer à la fois des signaux impulsionnels à large bande et des signaux monochromatiques à fréquence variable. Pour détecter d'éventuelles obstructions dans les canalisations il est souhaitable d'utiliser des signaux impulsionnels à large bande, tandis que les signaux monochromatiques à fréquence variable permettent d'effectuer la destruction des obstructions détectées à un emplacement donné.

Les caractéristiques fréquentielles des signaux arrivant à la structure à inspecter sont déterminées par le produit du signal sortant du générateur 10, 10a et la réponse du transducteur d'émission 14, 14a. Au passage de ce signal complexe, la structure offrira au transducteur de réception 20 une réponse multi-fréquentielle, qui conduit à l'obtention d'une signature spectrale fonction de la situation physique de la cible : absence de dépôt, présence de dépôt...

Les signaux de type impulsionnel sont caractérisés par un contenu spectral large. Pour obtenir une signature spectrale appropriée, il est donc préférable d'utiliser ce type de signaux.

Inversement, la fonction de destruction est mieux assurée par des signaux de type monochromatique, porteurs d'un niveau énergétique élevé.

L'adaptation de la fréquence à une certaine situation physico-chimique de la cible, forcément évolutive dans un processus de destruction, est obtenue grâce à l'utilisation d'une excitation en fréquences glissantes. Le taux de balayage fréquentiel, dans un intervalle dépendant de la réponse du transducteur 14, 14b, est sensiblement plus rapide que le temps d'établissement des actions mécaniques et de cavitation induites.

Dans un mode de réalisation ne faisant pas partie de l'invention, chaque générateur de signaux peut être associé à une électronique de commande et à un transducteur piézoélectrique distinct, l'un des transducteurs fonctionnant pour la localisation des obstructions et l'autre transducteur fonctionnant pour la destruction des obstructions, chaque transducteur étant ainsi optimisé pour la fonction qu'il doit remplir. On appelle alors source impulsionnelle l'ensemble constitué par le générateur de signaux impulsionnels, l'électronique de commande et le transducteur piézoélectrique d'émission.

Dans un mode de réalisation particulier, une boucle de rétroaction permet de vérifier le couplage entre l'appareillage et la canalisation, et éventuellement de repositionner l'adaptateur mécanique 15 afin d'optimiser le couplage. Cette boucle de rétroaction, représentée sur la partie droite des figures 1-4, comporte typiquement un capteur PVDF 30 (polyfluorure de vinylidène) et un extensomètre 31 couplés à une unité électronique d'acquisition des paramètres de surveillance et de contrôle 32. Ces paramètres sont fournis à une unité d'analyse 33 qui identifie les conditions de couplage et d'évolution de la charge mécanique ressentie par le système ultrasonore. L'unité d'analyse 33 génère alors les paramètres de régulation 34 qui sont appliqués à l'unité de régulation et contrôle 11 pour piloter le processus de destruction d'obstructions.

L'appareillage est installé sur un véhicule opéré à distance (ROV, « remotely operated vehicle ») ou un véhicule sous-marin autonome (AUV, « autonomous underwater vehicle »), afin d'être descendu et piloté en milieu marin depuis un navire ou une plate-forme située en surface, pour intervenir sur une canalisation sous-marine 100. L'intervention sur la canalisation peut se faire lors d'opération de contrôle de routine, ou après détection, en surface, d'une perturbation de l'écoulement imputée à un élément obstruant situé à l'intérieur de la canalisation, comme par exemple un bouchon d'hydrates.

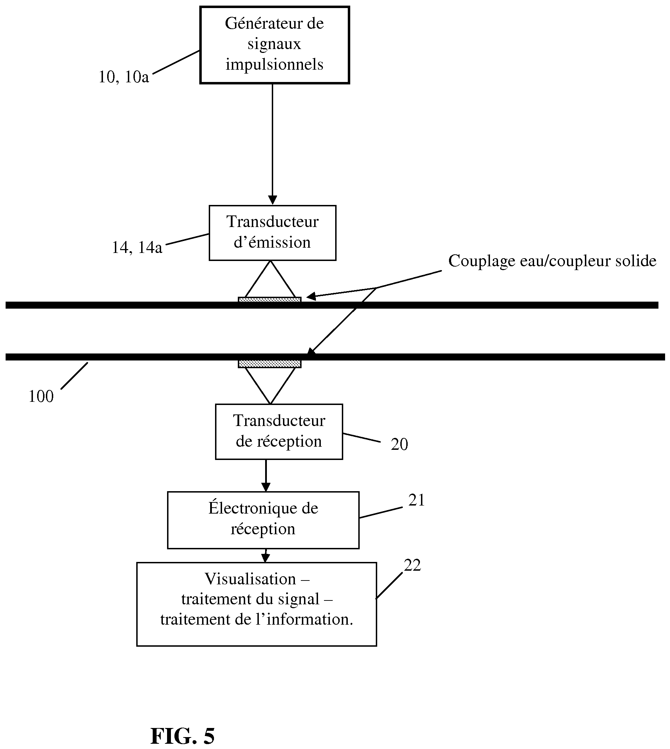

Après une descente de l'appareillage dans le milieu marin, et positionnement de celui-ci sur la canalisation, une première phase de l'intervention consiste à localiser l'obstruction présumée. Cette phase d'inspection utilise la source impulsionnelle (10, 14a sur la figure 1 / 10a, 14a sur la figure 2 / 10, 14 sur la figure 3 / 10, 10a, 14, 14a sur la figure 5) et le ou les transducteurs ultrasonores de réception 20.

La figure 5 illustre un positionnement possible de la source impulsionnelle et d'un transducteur ultrasonore de réception 20 dans la phase d'inspection, dans l'un des modes de réalisation représentés sur les figures 1-3. La source impulsionnelle comporte le générateur 10, 10a de signaux impulsionnels à large bande associé au transducteur d'émission 20. Le transducteur d'émission 14, 14a est de type piézo-électrique, constitué d'un empilement de céramiques associé à une pièce de diffusion. La géométrie et la structure de cette pièce de diffusion sont adaptées pour obtenir une bonne directivité de la source vers la canalisation inspectée.

Le transducteur d'émission 14, 14a et le transducteur de réception 20 sont placés de part et d'autre de la canalisation 100. Ainsi, les ondes ultrasonores captées par le transducteur 20 sont des ondes qui ont été transmises depuis le transducteur 20 à travers un milieu comprenant, outre l'eau de mer, la canalisation 100 et éventuellement une obstruction contenue dans cette canalisation.

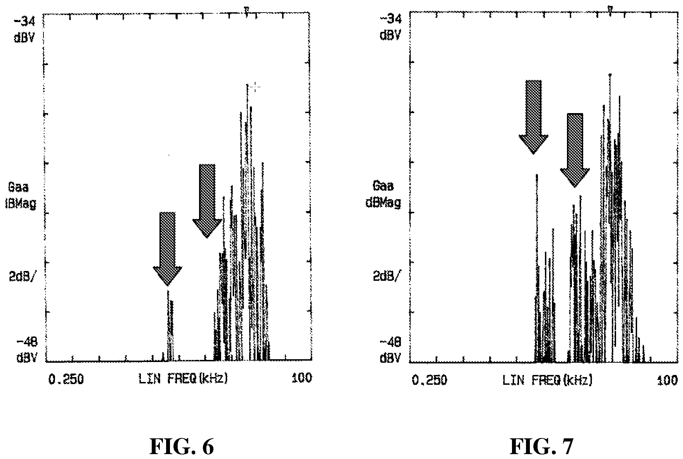

L'unité de traitement 22 associée au transducteur de réception 20 permet d'enregistrer et d'analyser un signal spectral. Comme illustré sur les figures 6 et 7, le signal spectral présente une forme différente selon que la canalisation 100 est simplement remplie de liquide, ou qu'elle présente un élément obstruant à l'emplacement où sont disposés les transducteurs d'émission 14, 14a et de réception 20.

Par comparaison des signaux spectraux, il est possible d'identifier et de localiser une éventuelle obstruction. Cette opération est réalisée automatiquement par l'unité de traitement 22.

L'appareillage est déplacé le long de la canalisation 100, à l'aide du ROV/AUV, afin de positionner successivement la source impulsionnelle et le transducteur de réception 20 à différents emplacements le long de la canalisation. À chaque emplacement, une signature spectrale est enregistrée par l'unité de traitement 22. Une première signature spectrale est généralement observée tant que la canalisation 100 contient du liquide (par exemple selon la figure 6). Dès qu'une obstruction est rencontrée, une deuxième signature spectrale (par exemple selon la figure 7), différente de la première est enregistrée par l'unité de traitement 22, et détectée comme étant une anomalie. On localise ainsi une obstruction dans la canalisation 100 à l'emplacement considéré, sans avoir eu à accéder à l'intérieur de la canalisation.

Une fois qu'une obstruction a été localisée dans la phase d'inspection, une phase de destruction est conduite à cet emplacement.

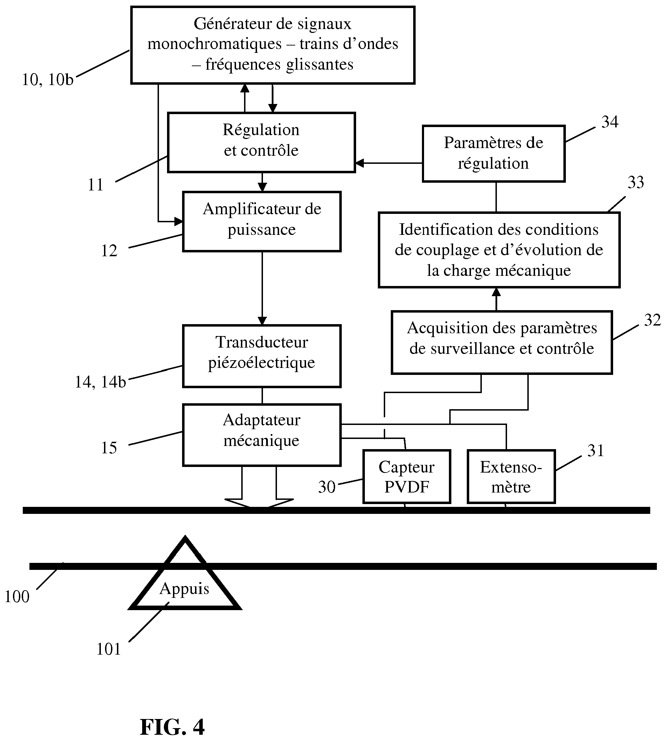

Le système représenté schématiquement sur la figure 4 peut être utilisé à cette fin, dans l'un des modes de réalisation illustrés par les figures 1-3. Ce système comporte une source ultrasonore comportant un transducteur 14, 14b associé à un générateur de signaux monochromatiques à fréquence variable 10, 10b. Le transducteur 14, 14b est constitué d'un empilement de céramiques piézo-électriques séparées par des pièces métalliques de polarisation auxquelles sont appliqués les signaux de puissance issus du générateur 10, 10b et amplifié par amplificateur 12.

Dans la phase de destruction, la source de puissance est activée dans une plage de fréquences ultrasonores plus basse que la source d'inspection dans la phase d'inspection. La plage de fréquences ultrasonores dans la phase de destruction peut notamment être comprise entre 10 kHz et 30 kHz.

Le transducteur 14, 14b transforme l'excitation électrique en mouvement de piston à haute fréquence attaquant la canalisation 100 par l'intermédiaire de l'adaptateur mécanique 15 qui réalise le couplage. Le module transducteur 14, 14b peut être composé de plusieurs unités organisées en étoile autour de la canalisation 100. L'excitation de ces unités multiples peut être issue d'amplificateurs qui leur sont respectivement dédiés, ou d'un même amplificateur 12 dont les signaux de sortie sont distribués à l'aide d'un module complémentaire de programmation de cycles d'excitation.

L'adaptateur 15 assure le transfert d'énergie du transducteur 14, 14b à la canalisation 100. La qualité du couplage joue un rôle important dans la capacité du système à agir sur l'obstruction. Pour s'en assurer, des capteurs spécifiques sont installés à proximité de l'adaptateur 15 afin de renseigner sur la qualité du couplage mécanique et de régler l'adaptateur 15. Ces capteurs spécifiques comprennent le capteur PVDF 30 et l'extensomètre 31 qui mesurent la réponse mécanique de la canalisation 100 à l'excitation ultrasonore et fournissent leurs résultats à l'unité d'acquisition 32 et l'unité d'analyse 33.

Dans une phase de calibrage du système, des valeurs de force et de sortie en tension des capteurs PVDF sont obtenues dans des conditions de surveillance directe des opérations. Ces valeurs sont structurées sous forme de bases de données intégrant: les conditions de serrage, les caractéristiques géométriques de la canalisation, les caractéristiques structurelles de la canalisation, la nature de l'isolant autour de la canalisation, la structure de cet isolant, la définition et les caractéristiques du système multiphasique circulant dans la canalisation, la nature de l'obstruction, les caractéristiques structurelles de l'obstruction, les données de sortie de l'extensomètre 31, les données de sortie du capteur PVDF 30.

Les bases de données sont traitées à l'aide de structures neuronales de type réseaux de neurones formels ou de méthodes évoluées de traitement de l'information de type SVM par exemple (« Support Vector Machines »). La comparaison des résultats de laboratoire avec les données recueillies sur le terrain permet le suivi des conditions d'installation du système de destruction d'obstructions, et la vérification de la qualité du couplage. Elle conduit à la décision de démarrage des opérations de destruction.

Simultanément, les données fournies par les capteurs 30, 31 informent sur l'évolution du processus de destruction. En effet, le résultat global des mesures *in situ* est fonction de la réponse de la structure, dans son ensemble, en rapport donc avec la charge représentée par l'obstruction et l'évolution de la charge dérivée de la transformation de la structure (désagrégation de l'obstruction).

L'action sur l'obstruction est composée de deux facteurs principaux :
- les vibrations directement induites dans la structure provoquant des contraintes mécaniques dans l'obstruction ;
- les phénomènes de cavitation, responsables d'agressions violentes en pression et température sur la surface de l'obstruction en contact avec le liquide où la cavitation est produite.

Les fractures générées dans l'obstruction par l'action vibratoire haute fréquence peuvent être remplies par le liquide, ce qui permet d'obtenir l'action de cavitation à l'intérieur de l'obstruction. Les surfaces attaquées par la cavitation se multiplient et l'efficacité du processus de désagrégation se globalise.

La détection et l'évaluation de l'action de cavitation constitue un élément complémentaire de contrôle, en association avec l'obtention des données vibratoires. Les mesures réalisées par les capteurs, associés à des modules électroniques d'acquisition, traitement, filtrage sélectif et seuillage, conduit à la détection et à l'évaluation de l'action de cavitation par une méthode non-intrusive.

Dans la phase de destruction d'une obstruction, le signal de commande issu du générateur 10, 10b est un signal monochromatique dont la fréquence varie à l'intérieur de la large bande explorée, par exemple de 10 à 30 kHz. L'unité de régulation et contrôle 11 fait balayer la fréquence ultrasonore de ce signal monochromatique au cours de cycles répétitifs qui permettent de maximiser la probabilité de rencontrer une fréquence de résonance du système canalisation+obstruction dans l'état présent de l'obstruction. La fréquence de balayage dans ces cycles et typiquement inférieur à 500 Hz.

Une fois que la phase de destruction d'une obstruction a été conduite pendant un temps déterminé ou suite à un changement détecté par les capteurs 30, 31, le système de localisation (figure 4) peut être remis en place à l'emplacement courant de l'appareillage, afin de vérifier si l'anomalie du spectre du signal obtenu en alimentant le transducteur d'émission 14, 14a de la source d'inspection est toujours présente. Cette phase de vérification permet d'identifier si l'obstruction est toujours présente à l'emplacement considéré le long de la canalisation 100. Si elle est encore, la phase de destruction peut être poursuivie.

Les modes de réalisation de l'invention décrits ci-dessus sont des illustrations de la présente invention. Diverses modifications peuvent leur être apportées sans sortir du cadre de l'invention qui ressort des revendications annexées.

## Revendications

1. Procédé d'intervention sur une canalisation sous-marine (100), comprenant une phase de descente dans le milieu marin d'un appareillage comprenant un système d'émission d'ultrasons et au moins un transducteur de réception d'ultrasons (20), une phase d'inspection le long de la canalisation à l'aide de l'appareillage descendu puis, lorsque la phase d'inspection montre une condition de localisation d'une obstruction à un emplacement le long de la canalisation, une phase de destruction de l'obstruction audit emplacement à l'aide de l'appareillage descendu,
la phase d'inspection comprenant:
- disposer une source ultrasonore d'inspection du système d'émission d'ultrasons et le transducteur de réception (20) de part et d'autre de la canalisation (100);
- activer la source d'inspection et enregistrer un signal ultrasonore capté par le transducteur de réception; et
- détecter la condition de localisation d'une obstruction à l'emplacement où sont disposés la source d'inspection et le transducteur de réception en réponse à l'observation d'une anomalie dans le signal ultrasonore capté par le transducteur de réception à cet emplacement,
et la phase de destruction comprenant:
- coupler une source de puissance du système d'émission d'ultrasons à la canalisation audit emplacement; et
- activer la source de puissance pour détruire l'obstruction, où source d'inspection et la source de puissance partagent un même générateur ultrasonore et un même transducteur (14),
- on utilise des signaux impulsionnels à large bande durant la phase d'inspection, et
- on utilise des signaux monochromatiques à fréquence variable durant la phase de destruction.

2. Procédé selon la revendication 1, dans lequel la phase d'inspection comprend un déplacement de l'appareillage le long de la canalisation et une répétition de l'étape d'activation de la source d'inspection et d'enregistrement du signal ultrasonore capté par le transducteur de réception (20) jusqu'à ce qu'une anomalie soit observée dans le signal ultrasonore enregistré.

3. Procédé selon la revendication 1 dans lequel la phase d'inspection comporte une analyse du spectre du signal capté par le transducteur de réception (20) pour détecter ladite anomalie dans ce spectre.

4. Procédé selon l'une quelconque des revendications précédentes, dans lequel la source de puissance est activée dans la phase de destruction dans une plage de fréquences ultrasonores plus basse que la source d'inspection dans la phase d'inspection.

5. Procédé selon l'une quelconque des revendications précédentes, dans lequel la source de puissance est activée dans la phase de destruction par un signal de commande à large bande.

6. Procédé selon la revendication 5, dans lequel la large bande est une plage de fréquences ultrasonores comprise entre 10 kHz et 30 kHz.

7. Procédé selon l'une quelconque des revendications 5 et 6, dans lequel la fréquence ultrasonore du signal de commande sensiblement monochromatique balaie la large bande avec une fréquence de balayage inférieure à 500 Hz.

8. Procédé selon l'une quelconque des revendications précédentes, dans lequel un capteur d'effort (30, 31) est associé à la source de puissance pour vérifier le couplage à la canalisation (100) dans la phase de destruction.

9. Procédé selon l'une quelconque des revendications précédentes, comprenant en outre, après la phase de destruction de l'obstruction audit emplacement, une phase de vérification dans laquelle la source d'inspection et le transducteur de réception (20) sont à nouveau disposés de part et d'autre de la canalisation et la source d'inspection est activée pour vérifier si le signal ultrasonore capté par le transducteur de réception présente encore l'anomalie.

## Patentansprüche

1. Verfahren zur Intervention an einer Unterwasser-Rohrleitung (100), umfassend einen Schritt des Absenkens einer Vorrichtung, die ein Ultraschall-Sendesystem und mindestens einen Ultraschall-Empfangswandler (20) umfasst, in die Meeresumgebung, einen Schritt der Inspektion entlang der Rohrleitung unter Verwendung der abgesenkten Vorrichtung und dann, wenn der Inspektionsschritt einen Zustand der Lokalisierung einer Blockierung an einer Stelle im Verlauf der Rohrleitung zeigt, einen Schritt der Zerstörung der Blockierung an dieser Stelle unter Verwendung der abgesenkten Vorrichtung, wobei der Inspektionsschritt umfasst:
- Anordnen einer Ultraschallquelle zur Inspektion des Ultraschall-Sendesystems und des Empfangswandlers (20) auf beiden Seiten der Rohrleitung (100);
- Aktivieren der Inspektionsquelle und Aufzeichnen eines vom Empfangswandler erfassten Ultraschallsignals; und
- Erkennen des Zustands der Lokalisierung einer Blockierung an der Stelle, an der die Inspektionsquelle und der Empfangswandler angeordnet sind, als Reaktion auf die Beobachtung einer Anomalie im vom Empfangswandler an dieser Stelle empfangenen Ultraschallsignal,
wobei der Schritt der Zerstörung umfasst:
- Koppeln einer Stromquelle des Ultraschall-Sendesystems an die Rohrleitung an der genannten Stelle; und
- Aktivieren der Stromquelle, um die Blockierung zu zerstören, wobei sich die Inspektionsquelle und die Stromquelle einen gemeinsamen Ultraschallgenerator und einen gemeinsamen Wandler (14) teilen,
- wobei während der Inspektionsphase breitbandige Impulssignale verwendet werden, und
- wobei während der Zerstörungsphase monochromatische Signale mit variabler Frequenz verwendet werden.

2. Verfahren nach Anspruch 1, wobei die Inspektionsphase eine Verlagerung der Vorrichtung entlang der Rohrleitung und eine Wiederholung des Schritts des Aktivierens der Inspektionsquelle und des Aufzeichnens des von dem Empfangswandler (20) erfassten Ultraschallsignals umfasst, bis eine Anomalie in dem aufgezeichneten Ultraschallsignal beobachtet wird.

3. Verfahren nach Anspruch 1, wobei die Inspektionsphase eine Analyse des Spektrums des von dem Empfangswandler (20) erfassten Signals umfasst, um die Anomalie in diesem Spektrum zu erkennen.

4. Verfahren nach einem der vorhergehenden Ansprüche, wobei die Stromquelle in der Zerstörungsphase in einem niedrigeren Ultraschallfrequenzbereich aktiviert wird als die Inspektionsquelle in der Inspektionsphase.

5. Verfahren nach einem der vorhergehenden Ansprüche, wobei die Stromquelle im Zerstörungsschritt durch ein Breitband-Steuersignal aktiviert wird.

6. Verfahren nach Anspruch 5, wobei das Breitband ein Ultraschall-Frequenzbereich zwischen 10 kHz und 30 kHz ist.

7. Verfahren nach einem der Ansprüche 5 und 6, wobei die Ultraschallfrequenz des im Wesentlichen monochromatischen Steuersignals das Breitband mit einer Abtastfrequenz von weniger als 500 Hz abtastet.

8. Verfahren nach einem der vorhergehenden Ansprüche, wobei ein Leistungssensor (30, 31) mit der Stromquelle verbunden wird, um die Verbindung mit der Rohrleitung (100) im Zerstörungsschritt zu überprüfen.

9. Verfahren nach einem der vorhergehenden Ansprüche, welches ferner nach dem Schritt der Zerstörung der Blockierung an der genannten Stelle einen Überprüfungsschritt umfasst, in dem die Inspektionsquelle und der Empfangswandler (20) erneut auf beiden Seiten der Rohrleitung angeordnet werden und die Inspektionsquelle aktiviert wird, um zu prüfen, ob das vom Empfangswandler erfasste Ultraschallsignal immer noch die Anomalie aufweist.

## Claims

1. Method for performing work on an underwater pipe (100), comprising a phase of lowering into the marine environment an apparatus comprising an ultrasound emitting system and at least one ultrasound receiving transducer (20), an inspection phase along the pipe using the lowered apparatus then, when the inspection phase shows a condition for locating an obstruction at a location along the pipe, a destruction phase of the obstruction at said location using the lowered apparatus,
the inspection phase comprising:
- arranging an ultrasound inspection source of the ultrasound emitting system and the receiving transducer (20) on either side of the pipe (100);
- activating the inspection source and recording an ultrasound signal captured by the receiving transducer; and
- detecting the condition for locating an obstruction at the location wherein are arranged the inspection source and the receiving transducer in response to the observation of an anomaly in the ultrasound signal captured by the receiving transducer at this location,
and the destruction phase comprising:
- coupling a power source of the ultrasound emitting system to the pipe at said location; and
- activating the power source in order to destroy the obstruction,
wherein
the inspection source and the power source use the same ultrasound generator (10) and the same transducer (14),
- wideband pulse signals are used during the inspection phase, and
- monochromatic signals with a variable frequency are used during the destruction phase.

2. Method according to claim 1, wherein the inspection phase comprises a displacement of the apparatus along the pipe and a repetition of the step of activating the inspection source and of recording the ultrasound signal captured by the at least one ultrasound receiving transducer (20) until an anomaly is observed in the ultrasound signal recorded.

3. Method according to claim 1, wherein the inspection phase comprises an analysis of the spectrum of the signal captured by the receiving transducer (20) in order to detect said anomaly in this spectrum.

4. Method as claimed in any preceding claim, wherein the power source is activated in the destruction phase in a range of ultrasonic frequencies that is lower than the inspection source in the inspection phase.

5. Method as claimed in any preceding claim, wherein the power source is activated in the destruction phase by a wideband control signal.

6. Method according to claim 5, wherein the wideband is a range of ultrasonic frequencies between 10 kHz and 30 kHz.

7. Method according to any one of claims 5 and 6, wherein the ultrasonic frequency of the substantially monochromatic control signal scans the wideband with a scanning frequency less than 500 Hz.

8. Method as claimed in claim 1, wherein a force sensor (30, 31) is associated with the power source in order to verify the coupling with the pipe (100) in the destruction phase.

9. Method as claimed in any preceding claim, further comprising, after the destruction phase of the obstruction in said location, a verification phase wherein the inspection source and the receiving transducer (20) are again arranged on either side of the pipe and the inspection source is activated in order to verify whether the ultrasound signal captured by the receiving transducer still has the anomaly.
